# EUROPÄISCHE PATENTSCHRIFT

(11) **EP 0 643 345 B1**
(45) Veröffentlichungstag und Bekanntmachung des Hinweises auf die Patenterteilung: **21.10.1998**
(21) Anmeldenummer: 94113223.5
(22) Anmeldetag: 24.08.1994
(51) Int. Cl.: G05B 23/02

(54) **Datenverarbeitungsanlage zur Überwachung von Betriebszuständen einer technischen Anlage**
Data processing device for the monitoring of the operating states of a technical plant
Dispositif de traitement de données pour la surveillance des conditions de fonctionnement d'une installation technique

(30) Priorität: 02.09.1993 DE 4329714
(43) Veröffentlichungstag der Anmeldung: 15.03.1995
(73) Patentinhaber: SIEMENS AKTIENGESELLSCHAFT, 80333 München (DE)
(72) Erfinder: Griffiths, Antony, D-91077 Kleinsendelbach (DE); Fandrich, Jörg, Dipl.-Phys., D-91096 Möhrendorf (DE); Müller, Helmut, D-90425 Nürnberg (DE)

(56) Entgegenhaltungen:
- WO-A-93/05477
- US-A- 5 132 920
- PATENT ABSTRACTS OF JAPAN vol. 14, no. 530 (P-1134) 21. November 1990 & JP-A-02 224 096 (TOSHIBA CORP.) 6. September 1990
- PATENT ABSTRACTS OF JAPAN vol. 11, no. 66 (P-552) 27. Februar 1987 & JP-A-61 228 501 (NIPPON ATOM IND GROUP) 11. Oktober 1986
- IEEE TRANSACTIONS ON POWER DELIVERY, Bd.8, Nr.1, Januar 1993, NEW YORK US Seiten 56 - 65 S. KUMANO ET AL. 'development of expert system for operation at substation'
- AT/Automatisierungstechnik, 36 (1988) Nov., No. 11, München, DE, Seiten 421-426, R. Isermann: "Wissensbasierte Fehlerdiagnose technischer Prozesse"

## Beschreibung

Die Erfindung bezieht sich auf eine Datenverarbeitungsanlage zur Überwachung von Betriebszuständen einer technischen Anlage. Hierbei werden unter technischen Anlagen beispielsweise auch fossilbefeuerte oder nukleare Kraftwerksanlagen sowie Fertigungs- und Produktionsanlagen verstanden.

In einer Kraftwerksanlage sollen Überwachungseinrichtungen die aktuellen Betriebszustände der Anlage erkennbar machen und Abweichungen von einem Sollzustand melden. Eine allgemein verwendbare Überwachungseinrichtung ist beispielsweise aus der DE-OS 38 12 618 bekannt. Eine spezielle Störungsfolgevorrichtung, die Bestandteil einer Überwachungseinrichtung sein kann, ist aus der DE-OS 38 32 789 bekannt.

Zur Umsetzung der Überwachungsaufgaben ist eine umfangreiche Meßwerterfassung der Betriebszustände aller Anlagenteile erforderlich. Dies sind beispielsweise in einer fossilbefeuerten Gas- und Dampfturbinenkraftwerksanlage unter anderem Komponenten und Hilfssysteme der Turbosätze. Diese Turbosätze umfassen als Funktionsgruppen die Gas- bzw. Dampfturbine sowie jeweils mit diesen über unterschiedliche Wellen gekoppelte Generatoren und einen Dampferzeuger bzw. einen Kondensator. Desweiteren können dies beispielsweise auch die Komponenten und Hilfssysteme der Brennstoff/Luftzuführung und der Brennersteuerung sowie der Kühlung der Generatoren sein. Wichtige Komponenten und Hilfssysteme sind außerdem die Komponenten und Hilfssysteme der Gas- bzw. Dampfturbine. Ein Signal- oder Datenaustausch erfolgt üblicherweise über ein Bussystem innerhalb eines den Anlagenteilen gemeinsamen Leitsystems, mit dem die Betriebszustände der Anlage teil- oder vollautomatisch gesteuert und überwacht werden.

Mit zunehmender Energie- oder Arbeitsausnutzung derartiger Anlagen wachsen auch die Anforderungen an die Anlagenverfügbarkeit, wobei für Wartungs- und Instandhaltungsmaßnahmen besonders kurze Stillstandzeiten angestrebt werden. Bei einer kombinierten Gas- und Dampfturbinenanlage bedeutet dies, daß allein für die Überwachung der Komponenten und Hilfssysteme der Generatoren und der Turbinen mehrere tausend Meßwerte in mehr oder weniger engen Zeitintervallen diskontinuierlich ausgewertet werden müssen. Die dadurch bedingte steigende Komplexität der Überwachungseinrichtungen führt zu wachsenden Schwierigkeiten bei der Handhabung durch das Bedienpersonal in einer Leitwarte, und zwar hinsichtlich sowohl eines umfassenden Überblicks über den aktuellen Betriebszustand der Anlage als auch einer frühzeitigen Erkennung von Defekten und Anlagenanomalitäten. Aus der EP-OS-0 242 609 ist hierzu beispielsweise ein hierarchisch aufgebautes Leitsystem bekannt, bei dem mit zunehmendem Automatisierungsgrad eine pyramidenförmig zunehmende Informationsverdichtung der von der Meßwerterfassung gelieferten Daten erreicht wird. Eine Beurteilung der Meßwerte bleibt jedoch dem Bedienpersonal überlassen, so daß das Bedienpersonal innerhalb kurzer Zeit, beispielsweise während besonders kritischer Betriebszustände, hohe Informationsdichten zu bearbeiten hat.

Der Erfindung liegt daher die Aufgabe zugrunde, eine Datenverarbeitungsanlage zur Überwachung von Betriebszuständen einer technischen Anlage, insbesondere einer Gas- und/oder Dampfturbinenanlage, anzugeben, mit der ausgehend von einer umfangreichen Meßwerterfassung eine hohe Betriebssicherheit und hohe Anlagenverfügbarkeit bei gleichzeitig besonders hoher Informationsverdichtung erreichbar ist.

Bezüglich der Datenverarbeitungsanlage wird diese Aufgabe erfindungsgemäß gelöst, durch
a) eine Meßebene mit Mitteln zur Erfassung von die Betriebszustände einer technischen Anlage charakterisierenden Meßwerten oder eine Simulationsebene mit einem Datenspeicher für die Betriebszustände der technischen Anlage charakterisierenden Meßwerte,
b) eine Kopplungsebene mit Mitteln zur Aufbereitung der Meßwerte unter Hinzufügung einer meßstellenspezifischen Kennung,
c) eine Verwaltungsebene mit einem Kennungs-Adressierungs-Baustein,
d) eine Aktionsebene mit einem Aktionsbaustein zur Bestimmung von Symptomen und/oder Diagnosen sowie ihrer zugehörigen Wichtigkeitswerte unter Durchführung logischer und/oder arithmetischer Operationen,
e) eine Datenebene mit mindestens einem Datenspeicher zur Speicherung von meßwertspezifischen Regeln, von Konfidenz-Regeln, von Konfidenz-Schwellen, von Anlagen-Symptomen, von Diagnosen und von gemessenen Meßwerten, und
f) eine Darstellungsebene mit einer Benutzeroberfläche.

Mit einer derartigen Datenverarbeitungsanlage ist es möglich, zunächst anhand der Meßwerte den aktuellen Betriebszustand der technischen Anlage zu erfassen. Diese Meßwerte werden anschließend anhand von aus dem technologischen Wissen abgeleiteten Regeln in Anlagen-Symptome umgewandelt, die den Meßwert frei von seiner absoluten Größe und geprüft auf die Relevanz des jeweiligen Meßwerts für den Betriebszustand eines bestimmten Anlagenteilprozesses beschreiben. Dabei erfolgt anhand der meßwertspezifischen Regeln, die im wesentlichen Zugehörigkeitsfunktionen sind, eine Fuzzifizierung der Meßwerte. Nun kann man auf zwei verschiedenen Wegen vorteilhaft fortfahren. Beim ersten Weg werden die Symptome anhand von weiteren aus dem technologischen Wissen abgeleiteten Regeln, nämlich den Konfidenz-Regeln, auf ihre Relevanz bezüglich eines störungsfreien Betriebes der Anlage hin überprüft. Der daraufhin dem Anlagen-Symptom zugeordnete Wichtigkeitswert ist also ein Maß dafür, wie stark der dem Anlagen-Symptom entsprechende Betriebszustand von einem bevorzugten Betriebszustand abweicht und damit ein Maß für die Störung des Betriebes ist. Weil aus einem oder mehreren Anlagen-Symptomen in Abhängigkeit von dem jeweils zugehörigen Wichtigkeitswert eine Diagnose des Betriebszustandes der Anlage erstellt wird, ist eine besonders hohe Informationsverdichtung gegeben, denn anhand der Wichtigkeitswerte ist eine für den Betrieb der Anlage vorteilhafte Auswahl der zur Erstellung einer Diagnose anstehenden Anlagen-Symptome durchführbar.

Bei einem zweiten eg wird aus einem oder mehreren Anlagen-Symptomen zunächst eine Diagnose abgeleitet, die dann anhand von weiteren aus dem technologischen Wissen abgeleiteten Regeln auf ihre Relevanz bezüglich eines störungsfreien Betriebs der Anlage hin überprüft wird. Der daraufhin der Diagnose zugeordnete Wichtigkeitswert ist ebenso ein Maß dafür, wie stark der der Diagnose entsprechende Betriebszustand von einem bevorzugten Betriebszustand abweicht. Er ist damit ein Maß für die Störung des Betriebes der Anlage. Der entsprechend dieser Diagnose zugeordnete Wichtigkeitswert erlaubt eine besonders hohe Informationsverdichtung, da anhand der Wichtigkeitswerte entschieden wird, wann eine Diagnose an die Benutzeroberfläche ausgegeben wird und wann nicht.

Um eine betriebssichere Weiterverarbeitung und Adressierung der Meßwerte zu erreichen, ist es vorteilhaft, wenn die Meßwerte mit einer meßstellenspezifischen Kennung und einer Statusinformation versehen und mittels der Kennung adressiert werden. Auf diese Weise wird ein sogenanntes Datentelegramm erzeugt, das sicher zu adressieren ist und dessen Wiederauffindung in einem Speicher der Datenverarbeitungsanlage fehlerfrei möglich ist. Anhand der Statusinformation, wie z. B. 0, NOT READY, NOT FOUND, BAD VALUE, ist eine Beurteilung des Konfidenz-Grades des Meßwertes durchführbar.

Um die Umwandlung der Meßwerte, oder des mit der Kennung und der Statusinformation versehenen Datentelegramms, in Anlagen-Symptome besonders schnell und mit geringem Aufwand an arithmetischen und logischen Operationen durchzuführen, ist es zweckmäßig, anhand der Kennung identifizierbare, meßwertspezifische Regeln des technologischen Wissens auf die Meßwerte anzuwenden, wobei für die Anlagen-Symptome die Kennungen und die Statusinformationen der die Anlagen-Symptome ursprünglich hervorrufenden Meßwerte übernommen werden. Auf diese Weise ist die Menge der Regeln, die auf einen Meßwert anzuwenden sind, eindeutig zugeordnet und begrenzt. Die einzelnen meßwertspezifischen Regeln des technologischen Wissens können beispielsweise Soll-Ist-Wert-Vergleiche, Grenzwertüberprüfungen und die Anwendung von Funktionen, wie z. B. Polynomen, auf die Meßwerte sein. So werden beispielsweise für eine Leckageüberwachung der Wasserstoffkühlung der Generatoren Symptome abgeleitet, die Aussagen aufweisen, wie z. B. "Wasserstoffdurchsatz schwach steigend", "Wasserstoffdruck gering fallend", "Wasserstofftemperatur nahezu konstant", "Wasserstoffkonzentration in Generatorumgebung sehr schwach ansteigend", usw. Desweiteren können aber auch Anlagen-Symptome weiterverarbeitet werden, die aus beispielsweise nichtplausiblen Meßwerten abgeleitet worden sind. Die übergebene Statusinformation, wie z. B. "BAD VALUE", stellt die Identifizierung solcher "fehlerhafter" Anlagen-Symptome sicher.

Zur schnellen Bearbeitung solcher Anlagen-Symptome ist es zweckmäßig, wenn zur Zuordnung der Wichtigkeitswerte zu den Anlagen-Symptomen anhand der Kennung identifizierbare den Wichtigkeitswert bestimmende Konfidenz-Regeln des technologischen Wissens den Anlagen-Symptomen zugeordnet werden. Anhand dieser Regeln werden die Anlagen-Symptome gewichtet. Dies kann beispielsweise in einem normierten Wichtigkeitswert ausgedrückt werden, der zwischen Null und Eins liegt und beispielsweise für das Anlagen-Symptom "Durchsatz gering steigend" 0.2 beträgt.

Um eine Zunahme der Informationsdichte in einfacher, aber betriebssicherer Weise zu erreichen, ist es vorteilhaft, wenn den Anlagen-Symptomen oder den Diagnosen anhand des technologischen Wissens Konfidenz-Schwellen zugeordnet sind.

Dies ist zugleich Voraussetzung für eine weitere vorteilhafte Ausgestaltung der Erfindung, die vorsieht, aus den Anlagen-Symptomen eine Diagnose des Betriebszustands zu erstellen, wenn der zu dem Anlagen-Symptom gehörende Wichtigkeitswert die zu dem Anlagen-Symptom gehörige Konfidenz-Schwelle übersteigt. Alternativ kann aus den Anlagen-Symptomen zunächst eine Diagnose erstellt werden, die nur dann an die Benutzeroberfläche weitergegeben wird, wenn der der Diagnose zugeordnete Wichtigkeitswert die zugehörige Konfidenz-Schwelle übersteigt. Auf diese Weise ist anhand der Betriebserfahrungen, die dem technologischen Wissen zugrundeliegen, eine besonders gewichtete Auswahlbedingung getroffen, so daß sich beispielsweise das Bedienpersonal in der Leitwarte nur in für den störungsfreien Betrieb der Anlage besonders kritischen Situationen mit einer Diagnose auseinanderzusetzen hat. Die Anforderungen an das Bedienpersonal werden dadurch auf die Fälle eingeschränkt, bei denen allein eine weitere Überwachung der Meßwerte und eine vollautomatische Einstellung von den Betriebszustand veränderten Stellgliedern der Anlage nicht zwingend zu einem Erfolg führen können.

Das Bedienpersonal erhält einen schnellen Überblick über den aktuellen Betriebszustand der Anlage, wenn aufgrund der Diagnose das Anlagen-Symptom, dessen zugehörige Symptombeschreibung, d. h. Ursachen und Konsequenzen, und ein auf dem technologischen Wissen basierender Therapievorschlag bezüglich dieses Anlagen-Symptoms oder dieser Diagnose an die Benutzeroberfläche einer elektronischen Datenverarbeitungsanlage ausgegeben wird. Hierdurch wird eine Früherkennung von sich anbahnenden Defekten und eine umgehende Reaktionen auf den derzeitigen Anlagenzustand ermöglicht. Dies kann so weit gehen, daß bei Vorliegen einer Diagnose vom Bedienpersonal abhängig oder auch Bedienpersonal-unabhangig die erforderlichen Maßnahmen zum störungsfreien Weiterbetrieb eingeleitet werden oder die Anlage oder Anlagenteile abgeschaltet werden.

Besondere Anforderungen an das Bedienpersonal und an das Leitsystem werden gestellt, wenn mehrere diagnosewürdige Anlagen-Symptome oder Diagnosen gleichzeitig vorliegen. Eine für den Betrieb der Anlage vorteilhafte Lösung wird erzielt, wenn eben bei Vorliegen mehrerer diagnosewürdiger Anlagen-Symptome eine Diagnose ausgehend von dem Anlagen-Symptom mit dem höchsten Wichtigkeitswert erstellt wird bzw. die Diagnose mit dem höchsten Wichtigkeitswert Priorität bekommt.

Die Betriebssicherheit und Verfügbarkeit der Anlage kann weiter dadurch gesteigert werden, daß über die Benutzeroberfläche die meßwertspezifischen Regeln und die Konfidenz-Regeln sowie die Konfidenz-Schwellen bedarfsweise modifiziert werden. Dies führt dazu, daß beispielsweise die Konfidenz-Schwelle eines Anlagen-Symptoms, das häufig zu einer Diagnose weiterverarbeitet wird, aber für den Betriebszustand der Anlage nicht so relevant ist, als daß dieses Symptom so häufig zur Diagnose weiterverarbeitet werden müßte, nachträglich für dieses Anlagen-Symptom angehoben wird. Der zugehörige Wichtigkeitswert des Anlagen-Symptoms müssen dann entsprechend der angehobenen Konfidenz-Schwelle höher sein, damit aus dem Anlagen-Symptom eine Diagnose erstellt wird.

Ausführungsbeispiele der Erfindung wird anhand einer Zeichnung näher erläutert. Dabei zeigen:
- Figur 1: ein Funktionsschema einer Einrichtung zur Überwachung von Betriebszuständen einer technischen Anlage;
- Figur 2: ein Funktionsschema eines ersten Aktionsbausteins der Einrichtung gemäß Figur 1;
- Figur 3: ein Funktionsschema eines zweiten Aktionsbausteins der Einrichtung gemäß Figur 1;
- Figur 4: ein Funktionsschema einer Einrichtung zur Überwachung gemäß Figur 1 mit einer Simulationsebene;
- Figur 5: ein Funktionsschema eines gegenüber der Figur 2 geringfügig modifizierten, ersten Aktionsbausteins der Einrichtung gemäß Figur 1; und
- Figur 6: ein Funktionsschema eines gegenüber der Figur 3 geringfügig modifizierten, zweiten Aktionsbausteins der Einrichtung gemäß Figur 1.

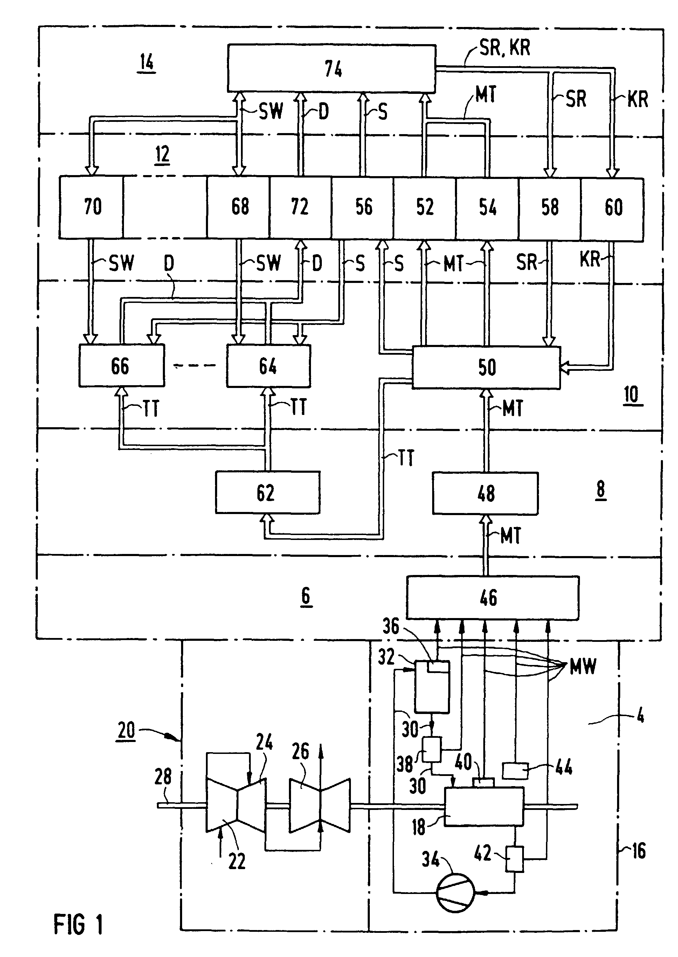

Das in der Figur 1 dargestellte Funktionsschema einer Einrichtung zur Überwachung von Betriebszuständen einer technischen Anlage, nachfolgend Diagnosesystem 2 genannt, umfaßt in sechs aufeinander aufbauenden Ebenen 4 bis 14 angeordnete und nachfolgend mit der Beschreibung des Funktionsschemas benannte Bausteine und Komponenten. Die im Ausführungsbeispiel zu überwachende technische Anlage ist eine hier nur angedeutete Gas- und Dampfturbinenkraftwerksanlage.

Der mit dem Diagnosesystem 2 zu überwachende Anlagenprozeß 16 ist im Ausführungsbeispiel der Wasserstoffkühlkreislauf eines Generators 18. Der Generator 18 ist mit einer Dampfturbine 20, die einen Hochdruckteil 22, einen Mitteldruckteil 24 und einen Niederdruckteil 26 umfaßt, auf einer gemeinsamen Welle 28 angeordnet, wobei der Generator 18 mittels der Dampfturbine 20 angetrieben wird. In dem geschlossenen Wasserstoffkühlkreislauf sind der Reihe nach an einer Wasserstoffleitung 30 ein Gasverdichter 34, ein Wasserstoffreservoir 32 mit integrierter Kühlstufe, ein Wasserstoffdurchfluß-, Temperatur- und Druckmesser 38, die Wärmetauscherkanäle des Generators 18 und ein weiterer Wasserstoffdurchfluß-, Temperatur- und Druckmesser 42 eingebaut. Zur Überwachung des Wasserstoffkühlkreislaufs sind ein Füllstandsmesser 36, ein Generatortemperaturmesser 40 und ein in unmittelbarer Umgebung des Generators 18 angeordneter Wasserstoffdetektor 44 vorgesehen.

Diese Mittel 36 bis 44 zur Meßwerterfassung senden ihre Meßwerte MW aus der ersten Ebene, nachfolgend als Meßebene 4 bezeichnet, über jeweils eigene Datenleitungen in eine zweite Ebene, nachfolgend Kopplungsebene 6 genannt, an einen Kopplungsbaustein 46. Dieser Kopplungsbaustein 46 bereitet die Meßwerte MW für deren weitere Verarbeitung auf, was im einzelnen bedeutet, daß die Meßwerte MW digitalisiert, syntaktisch aufbereitet, mit einer meßstellenspezifischen Kennung und einer Statusinformation versehen werden. Unter einer syntaktischen Aufarbeitung wird beispielsweise verstanden, daß die Meßwerte MW in Integer-Werte umgewandelt und so mit Steuerzeichen versehen werden, daß dieser ganzzahlige Wert (integer-Wert), bestehend aus drei Byte, beispielsweise in der Reihenfolge sehr bedeutsames Byte (most significant byte), mäßig bedeutsames Byte (medium significant byte) und gering bedeutsames Byte (low significant byte), übertragen wird. Die Meßwerte MW können aber ebenso gut beispielsweise als acht Byte lange reelle Zahlen übertragen werden.

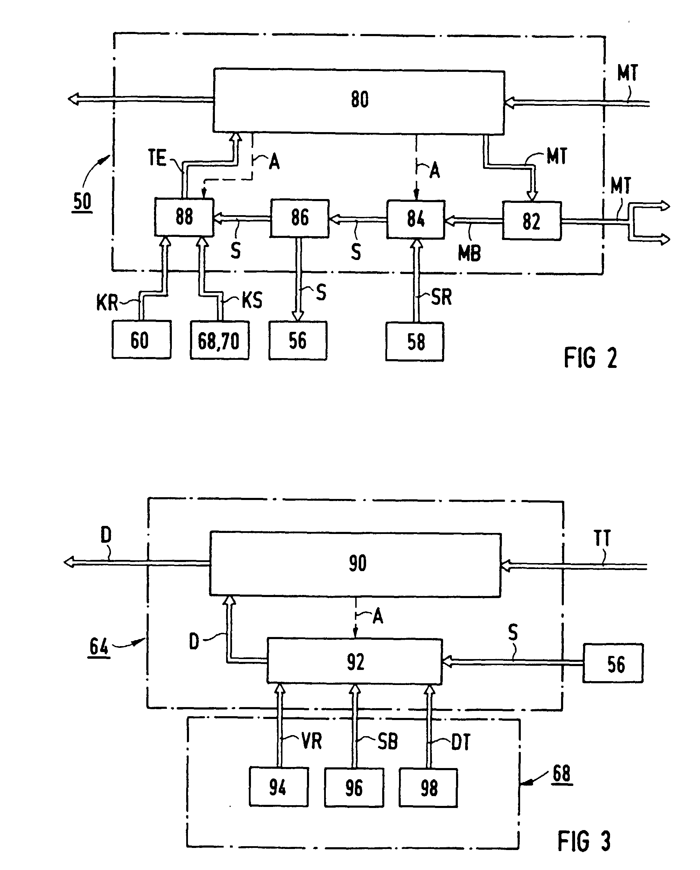

Von den Kopplungsbaustein 46 aus werden die nun aufbereiteten Meßwerte MW als Meßwerttelegramm MT an einen Kopplungs-Adressier-Baustein 48 in einer dritten Ebene, nachfolgend Verwaltungsebene 8 genannt, übertragen. Anhand der Kennung des Meßwerttelegramms MT adressiert der Kopplungs-Adressier-Baustein 48 das Meßwerttelegramm MT an die nachfolgenden Komponenten und überträgt hier das adressierte Meßwerttelegramm MT in eine vierte Ebene, nachfolgend als Aktionsebene 10 bezeichnet, zu einem ersten Aktionsbaustein 50. Die Funktion des Aktionsbausteins 50 wird nachfolgend zu Figur 2 noch näher erläutert. An dieser Stelle sei zunächst nur gesagt, daß das Meßwerttelegramm MT mittels des Aktionsbausteins 50 direkt jeweils in einen Kurzzeitspeicher 52 und eine Datenbank 54 übertragen wird. Der Kurzzeitspeicher 52 und die Datenbank 54 sind in einer fünften Ebene, nachfolgend Datenebene 12 genannt, angeordnet. In dieser Datenebene 12 sind außerdem ein Symptomspeicher 56, ein Speicher 58 für meßwertspezifische Regeln SR, die für das Meßwerttelegramm MT spezifisch sind, und ein Speicher 60 für Konfidenz-Regeln KR, d. h. auch qualifizierungsbestimmende Zugehörigkeitsfunktionen, angeordnet. Bei Eintreffen eines Meßwerttelegramms MT am Aktionsbaustein 50 werden Daten aus den Speichern 58, 60 abgerufen. Im Aktionsbaustein 50 wird das Meßwerttelegramm MT zu Anlagen-Symptomen S qualifiziert, die an den Symptomspeicher 56 ausgegeben werden. Außerdem werden den Anlagen-Symptomen S Wichtigkeitswerte zugeordnet, die als Triggertelegramm TT an einen weiteren Kopplungs-Adressier-Baustein 62 ausgegeben werden.

Hierarchisch begibt sich das Triggertelegramm TT dazu wieder in die Datenebene 6 und wird in der Kopplungsebene 8 anhand der zugehörigen Kennung mittels des Kopplungs-Adressier-Bausteins 62 zu einem der weiteren Aktionsbausteine 64, 66 adressiert. Diese weiteren Aktionsbausteine 64, 66 sind als Inferenzserver ausgestaltet, die entsprechend ihrer Adresse mit einem für diese Adresse spezifischen Triggertelegramm TT angesprochen werden und sich daraufhin das entsprechend der mit dem Triggertelegramm TT übertragenen Kennung identifizierbare Anlagen-Symptom S oder mehrere zu einem Symptomblock zusammengefaßte Anlagen-Symptome S aus dem Symptomspeicher 56 abrufen.

Ein Aktionsbaustein, beispielsweise der Aktionsbaustein 64, der aus dem Symptomspeicher 56 nach Eintreffen eines Triggertelegramms TT ein Anlagen-Symptom S lädt, ruft aus einem Speicher 68 für symptomspezifisches Wissen SW symptomspezifisches Wissen SW, d. h. die zugehörige Symptombeschreibung SB, die zugehörigen Diagnosetexte DT, Verknüpfungsregeln VR sowie mindestens einen aus dem Anlagen-Symptom S abgeleiteten Therapievorschlag TV, ab.

Aufgrund der Eigenschaften des Anlagen-Symptoms S kann es beispielsweise anhand der Verknüpfungsregeln VR auch noch erforderlich sein, daß der hier angesprochene Aktionsbaustein 64 Symptombeschreibungen SB oder Diagnosetexte DT von anderen symptomspezifischen Datenbanken, wie z. B. einem Speicher 70 für symptomspezifisches Wissen SW, benötigt, um eine eindeutige und informativ abgerundete Diagnose D liefern zu können. Die Speicher 68, 70 mit dem symptomspezifischen Wissen SW sind im Ausführungsbeispiel derart vernetzt, daß ein Datenaustausch in beliebiger Richtung untereinander möglich ist.

Die mittels des Aktionsbausteins 64 oder des Aktionsbausteins 66 erzeugte Diagnose D wird in einem in der Datenebene 12 befindlichen Ergebnisspeicher 72 abgelegt. Aus dem Ergebnisspeicher 72 wird die einmal erzeugte Diagnose D direkt an eine Benutzeroberfläche 74 übertragen, die in einer sechsten Ebene, nachfolgend als Darstellungsebene 14 bezeichnet, angeordnet ist. Diese Benutzeroberfläche 74 umfaßt ein oder mehrere Terminals, in denen die Diagnose D optisch für das Bedienpersonal der Kraftwerksanlage dargestellt wird. Bedarfsweise kann das Bedienpersonal nun zusätzlich zu der angezeigten Diagnose D weiteres symptomspezifisches Wissen SW, das oder die Anlagen-Symptome S sowie das Meßwerttelegramm MT in der Benutzeroberfläche 74 aufrufen, um eine umfassende Beurteilung der angezeigten Diagnose D durchführen zu können. So kann anhand dieser Daten das Diagnoseergebnis nachvollzogen werden und auf die Weise erlerntes Wissen von der Benutzeroberfläche 74 aus auch als neue meßwertspezifische Regel SR und Konfidenz-Regel KR in den zugehörigen Speichern 58 bzw. 60 der Datenebene 12 abgelegt werden.

Das in Figur 1 gezeigte Diagnosesystem 2 erfüllt im besonderen die Anforderung an eine möglichst hohe Informationsverdichtung, um dem Bedienpersonal nur in besonders wichtigen Fällen den Betriebszustand der Kraftwerksanlage in besonders bedienerfreundliche Weise zur Verfügung zu stellen. Umgesetzt wird diese Anforderung im wesentlichen durch die Erstellung der Triggertelegramme TT, die eine Erstellung der Diagnose D aus einem Anlagen-Symptom S nur dann erlauben, wenn tatsächlich ein Triggertelegramm TT vom ersten Aktionsbaustein 50 ausgesendet wird.

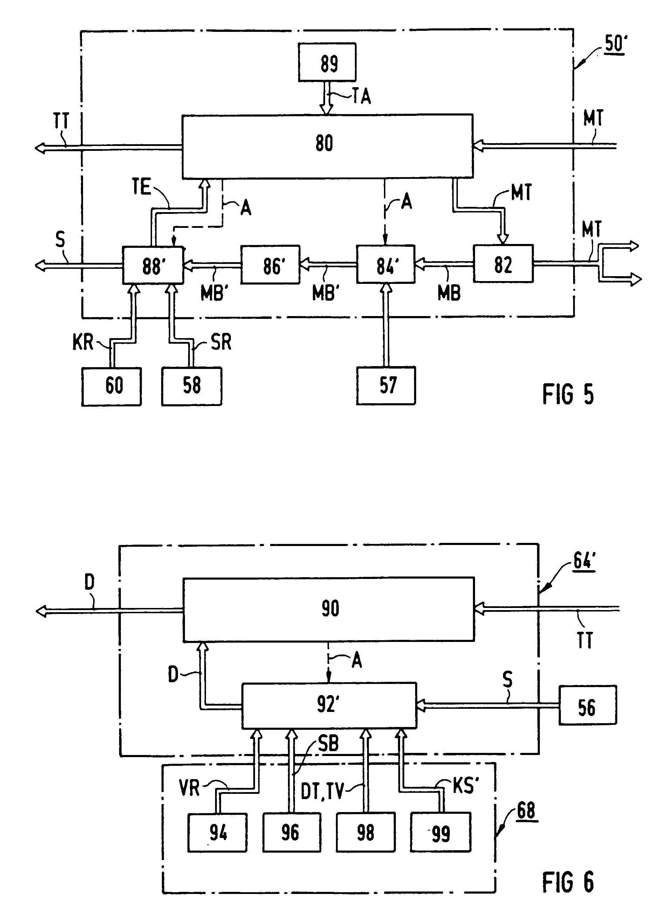

Ebenso ist die Anforderung an eine möglichst hohe Informationsverdichtung umgesetzt, wenn alternativ zu der vorstehend beschriebenen Ausführungsform geringfügig anders vorgegangen wird. Dabei ist es vorgesehen, daß zunächst jedes Anlagen-Symptom S von einem Triggertelegramm TT begleitet wird, das die Erstellung der zu dem Anlagen-Symptom S gehörenden Diagnose D erlaubt. Dann erst wird diese Diagnose D anhand eines Vergleiches mit der zu der Diagnose D gehörenden Konfidenz-Schwelle KS' (vergleiche Figur 6) auf ihre Relevanz für einen störungsfreien Betrieb der Kraftwerksanlage hin überprüft. Die Diagnosen D, die dann die zugehörigen Konfidenz-Schwellen KS' überschreiten, können beispielsweise in der Benutzeroberfläche 74 ein Alarmsignal hervorrufen oder als "High-Light-Message" an ein Datensichtgerät in der Benutzeroberfläche 74 ausgegeben werden, wobei die "High-Light-Message" erst dann erlischt und aus dem Datensichtgerät "rollt", wenn dem die Diagnose D auslösenden Betriebszustand abgeholfen worden ist.

In Figur 2 ist das Funktionsschema des ersten Aktionsbausteins 50 im einzelnen dargestellt. Das Meßwerttelegramm MT, d. h. die syntaktisch aufgearbeiteten, mit einer Kennung und einer Statusinformation versehenen Meßwerte MW, gelangen vom Kopplungs-Adressier-Baustein 48 zunächst zu einem sogenannten Triggerserver 80. Der Triggerserver 80 schiebt das Meßwerttelegramm MT zu einer Schnittstelle 82. Diese Schnittstelle 82 speichert das Meßwerttelegramm MT zwischen und schickt zum einen das Meßwerttelegramm MT direkt weiter an den Kurzzeitspeicher 52 und die Datenbank 54. Zum anderen reicht die Schnittstelle 82 das Meßwerttelegramm MT nun blockweise als Meßwertblock MB an einen Meßwertauswerter 84. Eine Aktivierung A des Meßwertauswerters 84 wird durch das Eintreffen eines Meßwerttelegramms MT im Triggerserver 80 veranlaßt. Die einzelnen Meßwertblöcke MB enthalten dabei den syntaktisch aufgearbeiteten Meßwert MW, dessen zugehörige Kennung, dessen zugehörige Statusinformation sowie Steuerzeichen zur Identifizierung von Anfang und Ende des Meßwertblockes MB und zur Trennung von Meßwert, Kennung und Statusinformation.

Der Meßwertauswerter 84 führt zunächst entsprechend der Kennung des Meßwertblocks eine Aufbereitung des Meßwertes, z. B. die lineare Regression, Integration usw., durch. Außerdem lädt der Meßwertauswerter 84 anhand der Kennung identifizierbare und nur die für diesen Meßwert spezifischen Regeln SR, d. h. auch die zur Fuzzyfizierung erforderlichen Zugehörigkeitsfunktionen, aus dem zugehörigen Speicher 58. Genau diese Regeln SR werden anhand der Kennung, die im Meßwertblock MB übertragen wird, identifiziert. Diese meßwertspezifischen Regeln SR können beispielsweise Soll-Ist-Wert-Vergleiche, Grenzwertüberprüfungen oder auch mathematische Berechnungen sein. Anhand dieser Regeln, die aus dem technologischen Wissen bezüglich dieser Meßstelle und den für diese Meßstelle üblichen Betriebszuständen gewonnen worden sind, wird der ursprünglich vorhandene Meßwert MW in ein Anlagen-Symptom S umgewandelt. Aus einem scharfen Meßwert für den Wasserstoffdurchsatz des Durchflußmessers 38 wird dann beispielsweise die Aussage "Durchsatz gering steigend" als Anlagen-Symptom S abgeleitet. Andere Aussagen können beispielsweise "Druck gering fallend", "Temperatur nahezu konstant" oder "Wasserstoffkonzentration in Umgebungsluft sehr gering ansteigend" sein.

Eine weitere Schnittstelle 86 sendet das gebildete Anlagen-Symptom S direkt weiter an den Symptomspeicher 56 sowie an einen Symptomauswerter 88. Dieser Symptomauswerter 88 hat nun die Aufgabe, das Anlagen-Symptom S einzeln für sich oder in Zusammenhang mit anderen Anlagen-Symptomen S auf seine bzw. ihre Relevanz hin bezüglich eines störungsfreien Betriebes der Kraftwerksanlage zu überprüfen. Er entscheidet letztendlich, ob aus dem Anlagen-Symptom S eine Diagnose D erstellt werden soll. Der Symptomauswerter 88 lädt dazu die Konfidenz-Regeln KR bezüglich dieses Anlagen-Symptoms S (identifiziert anhand der Kennung) aus dem zugehörigen Speicher 60 und das Symptomwissen SW aus dem oder den zugehörigen Speichern 68, 70 ein. Anhand der Konfidenz-Regeln KR wird dem Anlagen-Symptom S ein Wichtigkeitswert zugeordnet. Dieser Wichtigkeitswert liegt beispielsweise in einer normierten Skala zwischen 0 und 1. Die mit.dem Symptomwissen SW geladene Konfidenz-Schwelle KS bezüglich dieses Anlagen-Symptoms S (ebenfalls anhand der Kennung identifiziert) erlaubt nun einen Vergleich von Wichtigkeitswert und Konfidenz-Schwelle KS. Die Aussage "Durchsatz gering steigend" kann beispielsweise so bewertet werden, daß ihr ein unterhalb der Konfidenz-Schwelle liegender Wichtigkeitswert zugeordnet wird. Aus diesem Anlagen-Symptom S wird deshalb nachfolgend keine Diagnose D erstellt. Ebenso können die Aussagen "Druck gering fallend" und "Temperatur nahezu konstant" mit ihren zugehörigen Wichtigkeitswerten deutlich unterhalb ihrer zugehörigen Konfidenz-Schwellen KS liegen.

Für den zu überwachenden Anlagenprozeß 16, hier der Wasserstoffkühlkreislauf des Generators 18, bedeutend relevanter ist die Aussage "Wasserstoff in Umgebungsluft sehr gering ansteigend". Der Wichtigkeitswert dieses Anlagen-Symptoms S überschreitet die zugehörige Konfidenz-Schwelle KS, d. h. aufgrund des technologischen Wissens kann durch dieses Anlagen-Symptom S ein störungsfreier Betrieb der Kraftwerksanlage gefährdet sein. Der Symptomauswerter 88 sendet dann ein Triggerereignis TE an den Triggerserver 80, der daraufhin sofort ein Triggertelegramm TT absendet. Dieses Triggertelegramm TT umfaßt ebenfalls die von dem Meßwerttelegramm MT auf das Anlagen-Symptom S übertragene Kennung, damit nur der dieser Kennung zugeordnete Aktionsbaustein 64 oder 66 das Anlagen-Symptom S aus dem Symptomspeicher 56 laden kann. Infolge der Zuordnung von Wichtigkeitswerten und des Vergleichs der Wichtigkeitswerte mit Konfidenz-Schwellen KS im Symptomauswerter 88 wird eine sehr hohe Informationsverdichtung erreicht.

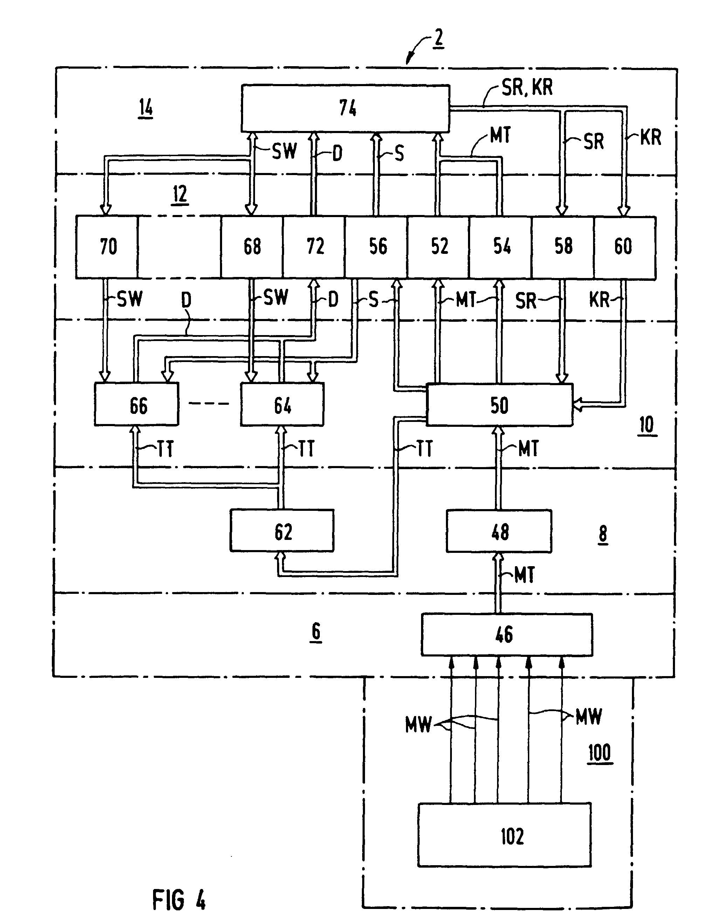

Figur 3 ist das Funktionsschema des zweiten Aktionsbausteins 64 dargestellt. Ein von dem Triggerserver 80 abgeschicktes Triggertelegramm TT trifft nach dessen Adressierung in einem Diagnoseserver 90 des zugehörigen Aktionsbausteins 64 ein. Der Diagnoseserver 90 veranlaßt eine Aktivierung A eines Diagnoseauswerters 92. Der Diagnoseinterpretor 92 ruft daraufhin das das zugehörige Triggertelegramm TT auslösende Anlagen-Symptom S aus dem Symptomspeicher 56 ab. Im vorliegenden Fall lautet dieses Symptom "Wasserstoffkonzentration in Umgebungsluft sehr gering ansteigend". Aus dem symptomspezifischen Speicher 68 wird das symptomspezifische Wissen SW abgerufen, und zwar werden im einzelnen Verknüpfungsregeln VR, die Symptombeschreibung SB und der Diagnosetext DT, die in separaten Speichern 94 bzw. 96 bzw. 98 abgelegt sind, abgerufen.

Im besonderen mit den Verknüpfungsregeln VR veranlaßt der Diagnoseauswerter 92 eine Bewertung des zur Diagnose D führenden Anlagen-Symptoms S mit anderen Anlagen-Symptomen S, etwa aus dem Symptomspeicher 56, deren Wichtigkeitswerte unterhalb der Konfidenz-Schwellen KS geblieben sind.

Beispielsweise ist nun unter zusätzlicher Berücksichtigung der Anlagen-Symptome "Durchsatz gering steigend" und "Druck gering fallend" eine Leckage wahrscheinlich. Weil jedoch noch "Temperatur nahezu konstant" gemeldet worden ist, d. h. die Temperatur des Generators 18 ist nahezu konstant, ist der Kühlmittelverlust noch nicht so groß, daß die Kühlleistung am Generator 18 gefährlich stark abfällt. Eine Leckageprüfung ist jedoch umgehend automatisch einzuleiten wegen des Anlagen-Symptoms "Wasserstoffkonzentration in Umgebungslust sehr gering steigend". Diese Leckageprüfung umfaßt beispielsweise zunächst eine Kontrolle der Meßfühler, bevor die eigentliche Leckagesuche gestartet wird.

Die mittels des Diagnoseauswerters 92 erstellte Diagnose D wird direkt an den Diagnoseserver 90 weitergeleitet, der die Diagnose D in den Ergebnisspeicher 72 lädt und direkt an die Benutzeroberfläche 74 ausgibt. Nach dem im Ausführungsbeispiel automatischen Durchführen der Leckageprüfung kann dem Bedienpersonal beispielsweise als Ergebnis angezeigt werden, daß die Leckage am Eingang des Wasserstoffreservoirs 32 auftritt, und daß dort vermutlich Simmerringe in der Schraubverbindung von Wasserstoffleitung 30 und Wasserstoffreservoir 32 defekt sind. Die Kette der logischen und arithmetischen Operationen, die ausgehend von dem Meßwert MW zur Diagnose D geführt haben, ist für das Bedienpersonal über die Benutzeroberfläche 74 lückenlos nachvollziehbar. Beim Betrieb der Anlage kann es sich herausstellen, daß für bestimmte Anlagen-Symptome S die Konfidenz-Regeln KR zu großzügig abgeleitet sind, oder daß eine Konfidenz-Schwelle KS anhand des technologischen Wissens TW zu hoch angesetzt worden ist. Derartige Erfahrungen kann das Bedienpersonal direkt über die Benutzeroberfläche 74 in die von den Modifikationen betroffenen Speicher 58, 60, 68, 70 laden.

In Figur 4 ist das Funktionsschema desselben Diagnosesystems 2 der Figur 1 nochmals dargestellt. Gegenüber Figur 1 geändert ist hier, daß die Meßebene 4 durch eine Simulationsebene 100 ersetzt ist. Die Simulationsebene 100 umfaßt im wesentlichen einen Datenspeicher 102 für Meßwerte MW. Diese Meßwerte MW können beispielsweise aus einem Betriebsintervall des technischen Anlagenprozesses 16, hier der Wasserstoffkühlkreislauf des Generators 18, stammen. Die im Datenspeicher 102 abgespeicherten Meßwerte MW können hierzu aus der Datenbank 54 abgerufen worden sein. Anhand dieser Ausgestaltung der Erfindung ist dem Bedienpersonal die Möglichkeit gegeben, den Betrieb der technischen Anlage zu simulieren und durch Manipulation der gespeicherten Meßwerte MW besonders kritische Anlagenzustände künstlich zu erzeugen. Diese Simulationen der Betriebszustände führen zu einer Verbesserung des Verständnisses der im allgemeinen vorliegenden Komplexität der technischen Anlage. Dieses verbesserte Verständnis wiederum erweitert das technologische Wissen TW und findet ihren Niederschlag in modifizierten, nun noch feiner abgestimmten Regeln SR, KR, Konfidenz-Schwellen KS und entsprechend angepaßtem symptomspezifischen Wissen SW.

Das technologische Wissen TW ist in der Datenebene 12 abgespeichert und gliedert sich in das in den Speichern 68, 70 abgelegte symptomspezifische Wissen SW, die in dem Speicher 58 abgelegten meßwertspezifischen Regeln SR und die in dem Speicher 60 abgelegten Konfidenz-Regeln KR.

Das in den Figuren 1 bis 6 erläuterte Diagnosesystem 2 eignet sich aufgrund des beschriebenen Aufbaus zur Überwachung der Betriebszustände verschiedener technischer Anlagen. Das für die jeweilige Anlage signifikante technologische Wissen TW steckt in den meßwertspezifischen Regeln SR, in den Konfidenz-Regeln KR, in den Konfidenz-Schwellen KS, die in dem symptomspezifischen Wissen SW enthalten sind.

Das in Figur 5 dargestellte Funktionsschema eines gegenüber der Figur 2 geringfügig modifizierten ersten Aktionsbausteins 50' weicht auch vom Aufbau nur gering von dem Funktionsschema in Figur 2 ab. Ein vom Kopplungs-Adressier-Baustein 48 am Triggerserver 80 eintreffendes Meßwerttelegramm MT wird auch hier an die Schnittstelle 82 angelegt und an einen Meßwertauswerter 84' sowie an den Kurzzeitspeicher 52 und die Datenbank 54 weitergeleitet. Eine Aktivierung A des Meßwertauswerters 84' wird ebenfalls durch das Eintreffen des Meßwerttelegramms MT vom Triggerserver 80 veranlaßt. In dem Meßwertauswerter 84' wird bei dieser Ausführungsform nun zunächst eine Aufbereitung des Meßwertblockes MB durchgeführt. Diese Aufbereitung umfaßt statistische Operationen, wie z. B. die lineare Regression und arithmetische Operationen, wie z. B. Differentiation, Integration und Mittelwertbildung. Die hierzu erforderlichen mathematischen Funktionsvorschriften und Daten werden - identifizierbar anhand der Kennung und der Statusinformation des Meßwertblockes MB - aus einem Speicher 57 geladen.

Der auf diese Weise aufbereitete Meßwertblock MB' wird vom Meßwertauswerter 84' in eine weitere Schnittstelle 86' geladen. Gleichzeitig mit der Aktivierung A des Meßwertauswerters 84' wird auch ein Symptomauswerter 88' aktiviert. Solange wie beispielsweise der Meßwertauswerter 84' noch mit der Verarbeitung des Meßwertblockes MB beschäftigt ist, lädt der Symptomauswerter 88' Meßwertblöcke MB', die den Status NOT READY aufweisen. Dies bedeutet, daß das an den Triggerserver 80 gesendete Triggerereignis TE kein Triggertelegramm TT veranlaßt.

Hat aber der modifizierte Meßwertblock MB' beispielsweise den Status 0, der für einen korrekten Meßwert MW steht, lädt der Symptomauswerter 88' die meßwertspezifischen Regeln SR, d. h. auch die zur Fuzzyfizierung erforderlichen Zugehörigkeitsfunktionen, und die Konfidenz-Regeln KR. Anhand dieser Regeln wird der modifizierte Meßwertblock MB' in ein Anlagen-Symptom S umgewandelt, welches in den Symptomspeicher 56 geladen wird. Diesem Anlagen-Symptom S wird darüber hinaus die Kennung und die Statusinformation des Meßwertblockes MB mitgegeben. Gleichzeitig wird dieses Anlagen-Symptom S als qualifiziertes Triggerereignis TE an den Triggerserver 80 gegeben. Anhand einer Triggerereignis-Triggertelegrammtabelle 89 wird das Triggerereignis TE mit aus der Tabelle 89 geladenen Triggeradressen TA zu dem Triggertelegramm TT verknüpft.

Der in der Figur 6 bezüglich seines Funktionsschemas dargestellte zweite gering gegenüber der Figur 3 modifizierte Aktionsbaustein 64' erhält in diesem Ausführungsbeispiel immer dann ein Triggertelegramm TT, wenn ein Anlagen-Symptom S aus einem mit der Statusinformation "0" behafteten Meßwertblock MB' gebildet worden ist. Ein am Diagnoseserver 90 eintreffendes Triggertelegramm TT bewirkt automatisch eine Aktivierung eines Diagnoseauswerters 92'. Nach seiner Aktivierung lädt dieser Diagnoseauswerter 92' das entsprechend seiner Kennung identifizierbare Anlagen-Symptom S oder auch mehrere anhand der Kennung identifizierbare Anlagen-Symptome S.

Außerdem werden aus dem Speicher 68 für symptomspezifisches Wissen SW Verknüpfungsregeln VR, Symptombeschreibungen SB, Diagnosetexte DT inklusive mindestens eines Therapievorschlages TV und symptomspezifische Konfidenz-Schwellen KS' geladen. Anhand der Verknüpfungsregeln VR wird aus dem Symptom oder den Anlagen-Symptomen S eine Diagnose D abgeleitet. Dabei können auch Verknüpfungsregeln VR, Symptombeschreibungen SB, Diagnosetexte DT und Konfidenz-Schwellen KS' anderer Speicher, z. B. Speicher 70, für symptomspezifisches Wissen SW zur Hilfe genommen werden.

Desweiteren wird der Diagnose D anhand des symptomspezifischen Wissens SW ein Wichtigkeitswert zugeordnet, der mit den vom Diagnoseauswerter 92' geladenen Konfidenz-Schwellen KS' verglichen wird. Überschreitet beispielsweise der Wichtigkeitswert einer Diagnose D dessen zugehörige Konfidenz-Schwelle KS', so kann die Statusinformation der Diagnose D beispielsweise von 0 auf 1 gesetzt werden. Eine solche Diagnose wird anhand der mit "1" identifizierbaren Statusinformation in der Benutzeroberfläche 74 mit besonderer Priorität aufbereitet. Dies kann beispielsweise dadurch geschehen, daß Diagnosen D mit der Statusinformation 0 üblicherweise in einen im Rollmodus betriebenen Datensichtgerät angezeigt, auf einem Drucker ausgegeben und nach einer gewissen Zeit, abhängig von der Anzahl nachfolgender Diagnosen D, aus dem Datensichtgerät "herausgerollt" werden. Demgegenüber wird eine Diagnose mit der Statusinformation 1 beispielsweise als "High-Light-Message" auf dem Datensichtgerät ausgegeben und zunächst nicht aus dem Datensichtgerät "herausgerollt". Erst wenn die dieser Diagnose D zugrundeliegende Therapie zu einem Erfolg geführt hat, was einem weiterhin störungsfreien Betrieb der technischen Anlage gleichkommt, erlischt diese "High-Light-Message" und wird dann ebenso wie die mit der Statusinformation 0 versehenen Diagnosen D aus dem Datensichtgerät herausgerollt und dokumentationshalber ausgedruckt.

Auf diese Weise ist ebenso wie in dem vorangehend beschriebenen Ausführungsbeispiel eine besonders hohe Informationsverdichtung gegeben. Das Eingreifen des Betriebspersonals wird auf diese Weise daher ausschließlich auf Fälle begrenzt, in denen der störungsfreie Betrieb der technischen Anlage essentiell gefährdet ist.

Die in den Funktionsschemata eingeführten Bausteine und Komponenten können in einer Datenverarbeitungsanlage nicht nur als physikalisch vorhandene Bausteine und Komponenten vorhanden sein, sondern sie können auch virtuell über entsprechende Software-Definitionen erzeugt werden. Auf diese Weise ist es möglich, auf Workstations and Personal Computer als Herzstücke dieses oder ähnlicher Diagnosesysteme 2 zurückgreifen zu können.

## Patentansprüche

1. Datenverarbeitungsanlage (2) zur Überwachung von Betriebszuständen (16) einer technischen Anlage mittels die Betriebszustände (16) charakterisierenden Meßwerten (MW) und mittels zum Betrieb der Anlage relevanten gespeicherten technologischen Wissens (TW)
**gekennzeichnet durch**
a) eine Meßebene (4) mit Mitteln (36 bis 44) zur Erfassung der die Betriebszustände der technischen Anlage charakterisierenden Meßwerten (MW) oder eine Simulationsebene (100) mit einem Datenspeicher für die Betriebszustände der technischen Anlage charakterisierenden Meßwerte (MW)
b) eine Kopplungsebene (6) mit Mitteln (46) zur Aufbereitung der Meßwerte (MW) unter Hinzufügung einer meßstellenspezifischen Kennung,
c) eine Verwaltungsebene (8) mit einem Kennungs-Adressie-rungs-Baustein (48),
d) eine Aktionsebene (10) mit einem Aktionsbaustein (50, 64, 66) zur Bestimmung von Anlagen-Symptomen (S) und/oder Diagnosen (D) sowie ihrer zugehörigen Wichtigkeitswerte unter Durchführung logischer und/oder arithmetischer Operationen,
e) eine Datenebene (12) mit mindestens einem Datenspeicher (52 bis 58) zur Speicherung von meßwertspezifischen Regeln (ER), von Konfidenz-Regeln (KR), von Konfidenz-Schwellen (KS), von Anlagen-Symptomen (S), von Diagnosen (D) und von gemessenen Meßwerten (MW), und
f) eine Darstellungsebene (14) mit einer Benutzeroberfläche (74).

## Claims

1. A data processing system (2) for monitoring operating states (16) of a technical plant by means of measured values (MW) characterising the operating states (16) and by means of stored technical knowledge (TW) relevant to the operation of the plant, characterised by
a) a measuring plane (4) with means (36 to 44) for the acquisition of the measured values (MW) characterising the operating states of the technical plant, or a simulation plane (100) with a data memory for measured values (MW) characterising the operating states of the technical plant,
b) a coupling plane (6) with means (46) for the preparation of the measured values (MW) with the addition of a measuring-point-specific code,
c) an administration plane (8) with a code-addressing module (48),
d) an action plane (10) with an action module (50, 64, 66) for determining plant symptoms (S) and/or diagnoses (D) and their associated significance values with the execution of logic and/or arithmetic operations,
e) a data plane (12) with at least one data memory (52 to 58) for the storage of measured-value-specific rules (SR), confidence rules (KR), confidence thresholds (KS), plant symptoms (S), diagnoses (D) and measured values (MW) and
f) a display plane (14) with a user surface (74).

## Revendications

1. Installation (2) de traitement de données pour surveiller des états (16) de fonctionnement d'une installation technique au moyen de valeurs (MW) de mesure caractérisant les états (16) de fonctionnement et au moyen d'un savoir (TW) technologique mémorisé et pertinent pour le fonctionnement de l'installation, caractérisée par
a) un niveau (4) de mesure comportant des moyens (36 à 44) pour relever les valeurs (MW) de mesure caractérisant les états de fonctionnement de l'installation technique ou un niveau (100) de simulation comportant une mémoire de données pour les valeurs (MW) de mesure caractérisant des états de fonctionnement de l'installation technique,
b) un niveau (6) de couplage comportant des moyens (46) pour mettre à disposition les valeurs (MW) de mesure en y ajoutant une identification spécifique au point de mesure,
c) un niveau (8) de gestion comportant un module (48) d'identification et d'adressage,
d) un niveau (10) d'action comportant un module (50, 64, 66) d'action pour déterminer des symptômes (S) d'installation et/ou des diagnostics (D), ainsi que les valeurs d'importance associées, en réalisant des opérations logiques et/ou arithmétiques,
e) un niveau (12) de données comportant au moins une mémoire (52 à 58) de données pour mémoriser des règles (SR) spécifiques aux valeurs de mesure, des règles (KR) de confiance, des seuils (KS) de confiance, des symptômes (S) d'installation, des diagnostics (D) et des mesures (MW) de valeurs mesurées, et
f) un niveau (14) d'affichage comportant une interface (74) homme/machine.
